# EUROPÄISCHE PATENTANMELDUNG

(11) **EP 3 721 970 A1**
(43) Veröffentlichungstag der Anmeldung: **14.10.2020**
(21) Anmeldenummer: 19020270.5
(22) Anmeldetag: 08.04.2019
(51) Int. Cl.: B01D 53/22

(54) **MEMBRANTRENNEINHEIT, ANORDNUNG VON MEMBRANTRENNEINHEITEN UND MEMBRANTRENNVERFAHREN**

(71) Anmelder: Linde GmbH, 82049 Pullach (DE)
(72) Erfinder: Voss, Christian, 82538 Geretsried (DE); Hoffmann, Rainer, 82008 Unterhaching (DE); Schiffmann, Patrick, 80331 München (DE); Johannink, Matthias, 81477 München (DE)
(74) Vertreter: Lu, Jing

(57) **Zusammenfassung**

Die vorliegende Erfindung betrifft eine Membrantrenneinheit (10) für ein Membrantrennverfahren zur Trennung eines Gasgemischs, wobei die Membrantrenneinheit (10) einen Druckbehälter (11) und eine innerhalb des Druckbehälters (11) in einer Membrananordnung (12) bereitgestellte Membran aufweist, und wobei der Druckbehälter (11) einen Eintrittsstutzen (13) für ein Einsatzgasgemisch (F), einen Austrittsstutzen (14) für ein Permeat (P) und einen Austrittsstutzen (15) für ein Retentat (R) aufweist. Die Membrantrenneinheit (10) weist dabei zumindest teilweise innerhalb des Druckbehälters (11) und/oder des Eintrittsstutzens (13) für das Einsatzgasgemisch und/oder des Austrittsstutzens (14) für das Permeat (P) und/oder des Austrittsstutzens (15) für das Retentat (R) angeordnete Messmittel (17, 18, 19), die zur Erfassung einer oder mehrerer betriebsrelevanter Kenngrößen eingerichtet sind. Eine Anordnung (100) aus mehreren entsprechender Membrantrenneinheiten (10) und ein Verfahren zur Trennung eines Gasgemischs mittels eines Membrantrennverfahrens unter Verwendung einer oder mehrerer entsprechender Membrantrenneinheiten (10) bzw. unter Verwendung einer entsprechenden Anordnung (100) ist ebenfalls Gegenstand der Erfindung.

## Beschreibung

Die vorliegende Erfindung betrifft eine Membrantrenneinheit, eine Anordnung mit mehreren solcher Membrantrenneinheiten und ein unter Verwendung einer oder mehrerer entsprechender Membrantrenneinheiten bzw. einer entsprechenden Anordnung durchgeführtes Membrantrennverfahren.

### Stand der Technik

Membrantrennverfahren zur Bearbeitung von Gasgemischen sind bekannt und beispielsweise bei Stookey, D.J., Membranes: Gas-Separation Applications, Ullmann's Encyclopedia of Industrial Chemistry, Wiley-VCH, Onlineveröffentlichung 2005, DOI 10.1002/14356007.a16_187.pub2, beschrieben. Bezüglich der hierbei verwendeten Membranmaterialien und der mittels Membrantrennverfahren trennbaren Gasgemische wird auf die Fachliteratur ausdrücklich Bezug genommen. Die vorliegende Erfindung kann grundsätzlich im Zusammenhang mit allen solchen Membranmaterialien und Membrantrennverfahren zum Einsatz kommen.

Membrantrennverfahren beruhen auf der unterschiedlichen Permeabilität und ggf. Affinität eines Membranmaterials für unterschiedliche Komponenten eines Gasgemischs. In einem Membrantrennverfahren wird das Gasgemisch dabei auf einer ersten Seite einer entsprechenden Membran (Retentatseite) bereitgestellt und es wird ein Druckgefälle über die Membran erzeugt. Komponenten, für die die Membran eine höhere Permeabilität aufweist, treten bevorzugt durch die Membran und können auf der zweiten Seite (Permeatseite), ggf. unter Einsatz eines Spülgases, abgeführt werden. Komponenten, für die die Membran eine geringere Permeabilität aufweist, verbleiben dagegen bevorzugt auf der Retentatseite und können hier abgeführt werden. Für ein auf der Retentatseite abgeführtes Gas oder Gasgemisch wird nachfolgend der Begriff "Retentat", für ein auf der Permeatseite abgeführtes Gas oder Gasgemisch der Begriff "Permeat" verwendet.

In entsprechenden Membrantrennverfahren kommen, wie in der zitierten Literatur ebenfalls beschrieben, typischerweise Membrankartuschen zum Einsatz, in denen beispielsweise senkrecht zur Längsachse angeordnete Membranstapel oder spiralig aufgewickelte Membranen ausgebildet sind, um die Kontaktfläche mit der Membran zu vergrößern. Auch aus entsprechenden Materialien gebildete Hohlfaserbündel können zum Einsatz kommen. Permeatseitig kann ein Spülgas geführt werden. Eine oder mehrere Membrankartuschen umfassen typischerweise ein Modul (in einem Druckgehäuse) und können zu mehreren in Baugruppen (engl. Banks oder Skids) zusammengefasst werden.

Bei den erläuterten Membrankartuschen, nachfolgend aus Gründen der Allgemeinheit auch als "Membrantrenneinheiten" bezeichnet, handelt es sich um komplex aufgebaute und zugleich nicht beliebig robuste Komponenten. Um eine Beschädigung der Membrantrenneinheiten zu verhindern, müssen diese stets innerhalb der Auslegungsgrenzen bzw. unter den spezifizierten Betriebsbedingungen, beispielsweise bezüglich des verwendeten Druckgefälles über die Membran hinweg, betrieben werden, um Ausfälle und Beschädigungen zu vermeiden.

Die vorliegende Erfindung stellt sich die Aufgabe, Mittel anzugeben, die es erlauben, einen spezifikationsgerechten Betrieb einer Membrantrenneinheit sicherzustellen bzw. zu dokumentieren sowie etwaige Schäden an einer Membrantrenneinheit rasch und sicher zu detektieren.

### Offenbarung der Erfindung

Die vorliegende Erfindung schlägt vor diesem Hintergrund eine Membrantrenneinheit, eine Anordnung mit mehreren solcher Membrantrenneinheiten und ein unter Verwendung einer oder mehrerer derartiger Membrantrenneinheiten bzw. einer entsprechenden Anordnung durchgeführtes Membrantrennverfahren mit den Merkmalen der jeweiligen unabhängigen Patentansprüche vor. Ausgestaltungen der vorliegenden Erfindung sind Gegenstand der abhängigen Patentansprüche sowie der nachfolgenden Beschreibung.

Die vorliegende Erfindung ermöglicht durch eine lokale Betriebsparameterdetektion an einer Membrantrenneinheit eine einfache und sichere Überwachung bzw. Aufzeichnung von Betriebsgrenzenüberschreitungen, die unabhängig vom jeweils verwendeten Prozessleitsystem (PLS, engl. Distributed Control System, DCS oder Process Control System, PCS) ist. Im Schadensfall kann somit durch den Einsatz der vorliegenden Erfindung einfacher geklärt werden, ob ein Defekt durch eine unsachgemäße Betriebsweise herbeigeführt wurde oder nicht.

Insbesondere ermöglicht die vorliegende Erfindung eine schnelle und zuverlässige Detektierung von Membranschäden anhand einer Verringerung der Permeataustrittstemperatur. Dadurch müssen im Schadensfall nicht alle Membrankartuschen einer Baugruppe ausgebaut und getestet werden, sondern lediglich diejenigen, auf welche der Schaden zurückgeführt werden kann. Dies kann die Stillstandszeit einer Membrananlage wesentlich reduzieren, bzw. eine Aufrechterhaltung des kontinuierlichen Betriebs ermöglichen.

Druck und Temperatur des Einsatzstroms sowie des Retentat- und Permeatstroms zu bzw. ausgehend von einer Membrananlage werden bisher allenfalls für eine gesamte Baugruppe aus mehreren Membrantrenneinheiten in Form einer Zeitreihe im Prozessleitsystem gespeichert. Die Konzentrationen von einzelnen Zielkomponenten werden ggf. im relevanten Produktstrom gemessen und ebenfalls als Zeitreihe gespeichert. Die vollständige Zusammensetzung der einzelnen Ströme zur und von der Membrantrenneinheit bzw. einer entsprechenden Baugruppe, insbesondere bestimmte Komponenten wie schwerere Kohlenwasserstoffe, wird typischerweise nicht oder nur sporadisch gemessen und dokumentiert.

Um zu dokumentieren, dass eine Membrantrenneinheit innerhalb der spezifizierten Betriebsbedingungen betrieben wurden, sollte, wie im Rahmen der vorliegenden Erfindung erkannt wurde, jedoch eine Indikation und Aufzeichnung der Verletzung dieser Bedingungen (z.B. ein Übersteigen von Druckgradienten) erfolgen. Diese sollte lokal an der Membrantrenneinheit vorgenommen werden, so dass sie beispielsweise im Garantieanspruchsfall einfach verfügbar ist.

Die Oberflächentemperaturen an den Permeataustrittsstutzen der Membrantrenneinheiten werden herkömmlicherweise per Hand oder mittels eines Infrarotmessgeräts regelmäßig gemessen, um Abweichungen zwischen den unterschiedlichen Modulen und damit eventuell defekte Membranen zu identifizieren.

Durch unterschiedliche Umgebungsbedingungen (Außentemperatur, Sonnenschein etc.) ist die am Austrittsstutzen gemessene Absoluttemperatur nur schwer interpretierbar, ganz zu schweigen von den Messfehlern einer Messung mit einem Handgerät, beispielsweise einem Infrarotthermometer.

Für die Identifikation von defekten Membrantrenneinheiten eignet sich, wie erfindungsgemäß erkannt wurde, die Permeatzusammensetzung und die Permeattemperatur. Durch defekte Membranen wird mehr Gas auf die Niederdruckseite entspannt, wodurch dieses stärker abkühlt. Die Permeattemperatur in den einzelnen Druckrohren kann jedoch herkömmlicherweise nicht direkt gemessen werden. Lediglich über eine Messung der Außentemperatur des Permeataustrittsstutzens (per Hand oder mittels eines Infrarotmessgeräts) kann herkömmlicherweise ein Rückschluss auf die Permeattemperatur eines individuellen Druckrohres relativ zur Permeattemperatur der anderen Druckrohre gezogen werden.

Die vorliegende Erfindung schlägt vor diesem Hintergrund eine Membrantrenneinheit für ein Membrantrennverfahren zur Trennung eines Gasgemischs vor. Die Membrantrenneinheit ist dabei grundsätzlich wie einleitend erläutert ausgebildet. Sie weist daher einen Druckbehälter und eine innerhalb des Druckbehälters in einer Membrananordnung bereitgestellte Membran auf. Die Membrananordnung kann in der einleitend erläuterten Weise bereitgestellt sein, beispielsweise in Form eines Membranstapels, einer spiralig gewickelten Membran oder einer Hohlfasermembran. Zu weiteren Details sei auf die zitierte Fachliteratur verwiesen. Die vorliegende Erfindung kann grundsätzlich mit sämtlichen aus dem Stand der Technik bekannten Membranmaterialien verwendet werden. Zur Vermeidung der Wiederholung von Bekanntem wird auf detailliertere Erläuterungen verzichtet.

Wie insoweit für entsprechende Membrantrenneinheiten (Membrankartuschen) üblich, weist der Druckbehälter einen Eintrittsstutzen für ein Einsatzgasgemisch, einen Austrittsstutzen für ein Permeat und einen Austrittsstutzen für ein Retentat auf. Es können auch mehrere entsprechende Ein- bzw. Austrittsstutzen vorhanden sein. Insbesondere kann in einer im Rahmen der vorliegenden Erfindung eingesetzten Membrantrenneinheit zusätzlich auch ein Eintrittsstutzen für ein Spülgas vorgesehen sein. Dies ist jedoch nicht Voraussetzung.

Die erfindungsgemäß vorgeschlagene Membrantrenneinheit zeichnet sich nun durch zumindest teilweise innerhalb des Druckbehälters und/oder des Eintrittsstutzens für das Einsatzgasgemisch und/oder des Austrittsstutzens für das Permeat und/oder des Austrittsstutzens für das Retentat angeordnete Messmittel aus, die zur Erfassung einer oder mehrerer betriebsrelevanter Kenngrößen eingerichtet sind.

Wie eingangs erläutert, werden herkömmlicherweise lediglich Druck und Temperatur eines Einsatzstroms sowie des Retentat- und Permeatstroms zu und von einer gesamten Membrananlage überwacht, wobei zudem nur jeweils bestimmte Parameter erfasst werden. Im Rahmen der vorliegenden Erfindung ist im Gegensatz dazu nun vorgesehen, insbesondere garantierelevante Prozessbedingungen, insbesondere Drücke wie beispielsweise einen Transmembrandruck, Temperaturen oder die Konzentration von für die Membranleistung besonders relevanten Komponenten lokal an einer entsprechenden Membrankartusche bzw. an den erwähnten Orten zu messen. Bei den im Rahmen der vorliegenden Erfindung eingesetzten Messmitteln kann es sich dabei um an sich bekannte Sensoreinheiten bzw. Aufnehmer oder Geber für entsprechende Kenngrößen handeln. Diese können zur Übermittlung entsprechender Sensorwerte eingerichtet sein, beispielsweise durch drahtgebundene oder drahtlose (Fern-)Übertragung. Im Rahmen der vorliegenden Erfindung können sämtliche Arten von Sensoren verwendet werden, beispielsweise Analog- oder Digitalsensoren bzw. sogenannte intelligente Sensoren, die bereits eine gewisse Auswertung eines entsprechenden Messsignals vornehmen.

Insbesondere kann dabei im Rahmen der vorliegenden Erfindung eine entsprechende Membrantrenneinheit mit einer innerhalb des Druckbehälters angebrachten oder mit einer dauerhaft mit dem Druckbehälter verbundenen Dokumentationseinheit ausgestattet sein, die zur Auswertung und/oder Speicherung der einen oder der mehreren betriebsrelevanten Kenngrößen eingerichtet ist. Auch die Dokumentationseinheit ist damit lokal an der entsprechenden Membrantrenneinheit vorgesehen und insbesondere dafür eingerichtet, lokale Kenngrößen zu erfassen. Dies schließt selbstverständlich nicht aus, dass eine entsprechende Membrantrenneinheit in eine übergeordnete Anordnung, insbesondere aus mehreren Membrantrenneinheiten, eingebunden sein kann, innerhalb derer dann weitere Auswerte- und Dokumentationseinheiten, beispielsweise zentrale Prozessleitsysteme, vorhanden sein können. Auf die unten getroffenen Erläuterungen bezüglich einer erfindungsgemäß vorgesehenen Anordnung sei dabei bereits an dieser Stelle ausdrücklich hingewiesen.

Die im Rahmen der vorliegenden Erfindung eingesetzten Messmittel können dabei insbesondere in Form eines oder mehrere gekapselter Sensoren bereitgestellt sein, welche ihre eigene Energieversorgung besitzen und insbesondere fest an dem Druckbehälter verbaut sein können. In dieser Weise ähneln diese Sensoren bzw. Messmittel den bekannten Temperaturaufklebern. Entsprechende Sensoren können auch über eine lokale Anzeige, insbesondere in Form eines sich verfärbenden Punktes, oder eine Fernübertragungseinrichtung, wie unten erläutert, verfügen, so dass entsprechende Daten rasch und problemlos ausgelesen werden können. Entsprechendes gilt auch für die erfindungsgemäß bereitgestellte Auswertungs- und Dokumentationseinheit.

Neben Drücken und Temperaturen, die bereits zuvor explizit erwähnt wurden, können entsprechende Messmittel auch dafür eingerichtet sein, bestimmte Komponenten, insbesondere in dem Permeat oder Retentat, jedoch ggf. auch im Einsatzgasgemisch, zu erfassen. Als entsprechende Messmittel können dabei beispielsweise spektroskopische Gassensoren verwendet werden. Da entsprechende Vorrichtungen nur drucklose Analysenströme verarbeiten können, kann in diesem Fall vorgesehen sein, einen Teil des jeweiligen Analysenstroms dem jeweiligen Hauptstrom (dem Einsatzgasgemisch, dem Retentatstrom bzw. dem Permeatstrom) zu entnehmen und zu entspannen. Nach einer entsprechend durchgeführten Analyse kann ein entsprechender Analysestrom zu dem Hauptstrom zurückgespeist werden.

Ein wesentlicher Aspekt der vorliegenden Erfindung besteht in der Bereitstellung einer Membrantrenneinheit, bei der die bereits erläuterte Dokumentationseinheit zur Bereitstellung, Auswertung und/oder Speicherung eines zeitlichen Verlaufs der einen oder mehreren betriebsrelevanten Kenngrößen eingerichtet ist. Auf diese Weise können beispielsweise Messereignisse wie das Überschreiten von Druckgradienten, d.h. der Veränderung des Drucks über die Zeit, oder das Über- oder Unterschreiten von Temperaturgrenzen oder maximal erlaubter Gradienten erfasst werden. Entsprechende betriebsrelevante Kenngrößen können dabei jeweils mit einem Zeitstempel in einer lokalen Speichereinheit erfasst werden. Sämtliche der zuvor erläuterten betriebsrelevanten Kenngrößen können dabei zur Auswertung in einem möglichen Garantiefall gespeichert werden. Auf diese Weise kann sicher festgestellt werden, ob eine etwaige Beschädigung einer entsprechenden Membrantrenneinheit auf Fertigungsfehler oder auf einen nicht spezifikationsgerechten Betrieb zurückzuführen ist.

In einer erfindungsgemäßen Membrantrenneinheit ist die Dokumentationseinheit vorteilhafterweise dafür eingerichtet, auf Grundlage der einen oder der mehreren betriebsrelevanten Kenngrößen und/oder eines oder mehrerer Merkmale des zeitlichen Verlaufs solcher Kenngrößen einen nicht spezifikationsgerechten Betrieb zu detektieren. Ein Beispiel für eine entsprechende Auswertung wurde bereits unter Bezugnahme auf Temperatur- bzw. Druckgradienten erläutert. Liegt eine Steilheit eines entsprechenden Gradienten oberhalb eines vorgegebenen Maximalwertes, kann davon ausgegangen werden, dass eine entsprechende Membrantrenneinheit nicht spezifikationsgerecht betrieben wurde, und daher eine mögliche Schädigung auf einen derartigen nicht spezifikationsgerechten Betrieb zurückzuführen ist.

Mit anderen Worten kann die Dokumentationseinheit dafür eingerichtet sein, auf Grundlage der einen oder mehreren betriebsrelevanten Kenngrößen und/oder eines oder mehrerer Merkmale des zeitlichen Verlaufs einen nicht spezifikationsgerechten Betrieb zu detektieren. Im Rahmen der vorliegenden Erfindung kann die Dokumentationseinheit der erfindungsgemäß vorgesehenen Membrantrenneinheit insbesondere eine fernauslesbare Speichereinrichtung aufweisen. Auf diese Weise wird es für einen Betreiber einer entsprechenden Anlage einfach möglich, entsprechende Kenngrößen auszulesen und zu erfassen, ohne jeweils eine kabelgebundene Verbindung zu den entsprechenden Dokumentationseinheiten herstellen bzw. eine lokale Druck- oder Temperaturmessung vornehmen zu müssen. Eine entsprechende fernauslesbare Speichereinrichtung kann insbesondere für eine Funkübertragung der entsprechenden Messdaten bzw. der betriebsrelevanten Kenngrößen oder hieraus abgeleiteter Werte wie zeitliche Verläufe eingerichtet sein. In besonderer Weise eignen sich hierbei RFID-Chips für eine entsprechende Datenübertragung, wobei entsprechende fernauslesbare Speichereinrichtungen insbesondere durch ein extern aufgebrachtes Signal zur Aussendung entsprechender Daten veranlasst werden können.

Wie bereits erläutert, können die Messmittel, die in einer Membrantrenneinheit gemäß einer Ausgestaltung der vorliegenden Erfindung eingesetzt werden, insbesondere einen Druckgeber umfassen, und die eine oder die mehreren betriebsrelevanten Kenngrößen können wenigstens einen Druckwert umfassen. Der wenigstens eine Druckgeber ist dabei insbesondere auf einer Permeat- und/oder einer Retentatseite der Membrananordnung innerhalb des Druckbehälters angeordnet. In besonderer Weise eignen sich zwei entsprechende Druckgeber, die auf beiden Seiten der Membrananordnung bereitgestellt sind, um auf diese Weise einen Transmembrandruck erfassen zu können. Auf diese Weise, und durch eine entsprechende Aufzeichnung von Druckgradienten, kann dokumentiert werden, ob eine entsprechende Betriebsvorgabe für die Membrantrenneinheit eingehalten wurde.

Die Messmittel umfassen ferner insbesondere wenigstens einen Temperaturgeber, zusätzlich oder alternativ zu dem einen oder den mehreren Druckgebern und entsprechenden anderen Messmitteln, wobei die eine oder die mehreren betriebsrelevanten Kenngrößen in diesem Fall einen oder mehrere Temperaturwerte umfassen können. Im Rahmen der vorliegenden Erfindung wurde als besonders vorteilhaft erkannt, in diesem Zusammenhang eine Temperatur innerhalb des Austrittsstutzens für das Permeat zu erfassen. Im Gegensatz zu herkömmlicherweise angewandten Messverfahren erlaubt eine Temperaturmessung innerhalb des Austrittsstutzens dabei eine direkte Temperaturmessung bezüglich des Permeats, die nicht durch externe Einflüsse, beispielsweise eine Sonneneinstrahlung auf den Permeatsaustrittsstutzen, verfälscht werden kann. Insbesondere können in einer Anordnung mit mehreren Membrantrenneinheiten dabei sämtliche Permeataustrittsstutzen mit einer entsprechenden Temperaturmessung versehen werden. Dies wird nachfolgend auch unter Bezugnahme auf die erfindungsgemäß vorgesehene Anordnung noch näher erläutert. Durch eine entsprechende Temperaturmessung kann insbesondere eine Membranschädigung erkannt werden, da, wie erwähnt, in diesem Fall eine größere Menge an (kaltem) Gas durch die Membran tritt und daher die Temperatur an dem Permeataustrittsstutzen absinkt.

Wie erwähnt, können entsprechende Messmittel im Rahmen der vorliegenden Erfindung auch insbesondere zur Erfassung einer Konzentration wenigstens einer Komponente in dem Einsatzgasgemisch, in dem Permeat und/oder in dem Retentat eingerichtet sein.

Die vorliegende Erfindung erstreckt sich ferner, wie bereits mehrfach angesprochen, auf eine Anordnung zur Trennung eines Gasgemischs mittels eines Membrantrennverfahrens. Die erfindungsgemäß bereitgestellte Anordnung zeichnet sich dabei durch mehrere Membrantrenneinheiten aus, wie sie zuvor in unterschiedlichen Ausgestaltungen erläutert wurden. Auf die obigen Ausführungen wird daher ausdrücklich verwiesen. Die Anordnung muss dabei nicht aus identischen Membrantrenneinheiten mit jeweils identischer Ausstattung aufgebaut sein; es kann sich vielmehr auch um mehrere unterschiedliche Membrantrenneinheiten handeln, wobei in bestimmten Fällen auch vorgesehen sein kann, erfindungsgemäße Membrantrenneinheiten und nicht erfindungsgemäße Membrantrenneinheiten miteinander zu kombinieren, sofern dies zweckmäßig erscheint.

Insbesondere weist die erfindungsgemäß vorgesehene Anordnung eine zentrale Auswerteeinheit auf, die dafür eingerichtet ist, die eine oder die mehreren betriebsrelevanten Kenngrößen, die mittels der Messmittel der mehreren Membrantrenneinheiten erfasst wurden, einer Vergleichsauswertung zu unterwerfen. Dies wird nachfolgend insbesondere unter Bezugnahme auf Temperaturen einer Temperaturmessung erläutert, kann jedoch auch für andere betriebsrelevante Kenngrößen in entsprechender Weise vorgenommen werden.

Insbesondere umfasst die Vergleichsauswertung im Rahmen der vorliegenden Erfindung eine Ausreißerermittlung. Die Ausreißerermittlung kann sich, wie erwähnt, insbesondere auf mehrere mittels der Messmittel der mehreren Membrantrenneinheiten ermittelte Temperaturen beziehen. Auf diese Weise wird eine sichere Detektion von Membranschäden ermöglicht, die insbesondere nicht durch externe Temperatureinflüsse verfälscht werden kann.

Zur sicheren Detektierung von Membranschäden wird dabei vorgeschlagen, sämtliche Permeataustrittsstutzen, oder zumindest einen Teil davon, mit einer insbesondere drahtlosen Oberflächentemperaturmessung (insbesondere unter Verwendung von RFID-Chips) auszustatten. Entsprechende Messergebnisse können in der zentralen Auswerteeinheit, die erfindungsgemäß bereitgestellt ist, beispielsweise in einem Lesegerät, regelmäßig ausgelesen und aufgezeichnet werden. Wenn angenommen werden kann, dass sämtlichen Permeataustrittsstutzen zu jedem Messzeitpunkt die gleichen Umgebungsbedingungen (Temperatur, Sonnenschein) haben, reicht es aus, Ausreißer zum jeweiligen Messzeitpunkt zu detektieren. Sämtliche Flansche bzw. Stutzen, die eine Temperatur aufweisen, die kleiner als eine gewisse vorgegebene Schwelle (beispielsweise 10°C) gegenüber dem Median aller Messdaten ist, deuten auf eine defekte Membran hin. Wird ein Austrittsstutzen dabei über einen gewissen Zeitraum (beispielsweise 24 Stunden) konstant als die Detektierungsschwelle überschreitend erkannt, kann eine Meldung an ein zentrales Prozessleitsystem oder direkt an den Hersteller gesendet werden, wonach die entsprechende Membrantrenneinheit bzw. deren Membran getauscht werden muss. Auf diese Weise wird eine sichere Erkennung defekter Membrantrenneinheiten ermöglicht.

Die vorliegende Erfindung erstreckt sich ferner auf ein Verfahren zur Trennung eines Gasgemischs mittels eines Membrantrennverfahrens, wobei sich dieses Verfahren dadurch auszeichnet, dass eine oder mehrere Membrantrenneinheiten verwendet werden, wie sie zuvor erläutert wurden, bzw. eine entsprechende Anordnung zum Einsatz kommt. Da die das erfindungsgemäß vorgeschlagene Verfahren von den zuvor erläuterten Merkmalen ebenfalls profitiert, sei auf diese nochmals ausdrücklich verwiesen. Insbesondere kann in dem erfindungsgemäß vorgeschlagenen Verfahren eine Erfassung der einen oder der mehreren betriebsrelevanten Kenngrößen erfolgen.

Die vorliegende Erfindung wird nachfolgend unter Bezugnahme auf die beigefügten Zeichnungen näher erläutert, welche Ausgestaltungen der vorliegenden Erfindung veranschaulichen.

### Kurze Beschreibung der Zeichnungen

Figur 1 veranschaulicht eine Membrantrenneinheit gemäß einer Ausgestaltung der vorliegenden Erfindung.
Figur 2 veranschaulicht eine Anordnung aus Membrantrenneinheiten gemäß einer Ausgestaltung der vorliegenden Erfindung.

In den nachfolgend erläuterten Figuren sind identische Komponenten mit identischen Bezugszeichen versehen und werden der Übersicht halber nicht wiederholt erläutert.

Dies gilt auch für baulich unterschiedlich aufgebaute, jedoch den gleichen Zweck erfüllende Komponenten.

### Ausführliche Beschreibung der Zeichnungen

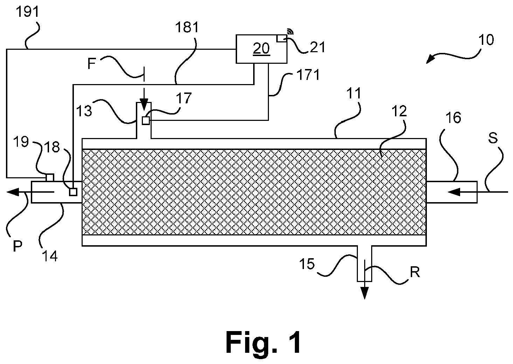

In Figur 1 ist eine Membrantrenneinheit gemäß einer besonders bevorzugten Ausgestaltung der vorliegenden Erfindung stark vereinfacht schematisch veranschaulicht und insgesamt mit 10 bezeichnet.

Die in Figur 1 dargestellte Membrantrenneinheit 10 umfasst einen Druckbehälter 11, der einen druckbeaufschlagbaren Innenraum einschließt. In dem Innenraum und damit innerhalb des Druckbehälters 11 ist eine Membrananordnung 12 bereitgestellt, die in unterschiedlicher Weise ausgestaltet sein kann, wie zuvor erläutert.

Zur Beaufschlagung der Membrantrenneinheit 10 mit einem Einsatzgasgemisch (Feed) F ist ein Eintrittsstutzen 13 für das entsprechende Einsatzgasgemisch F vorgesehen. Ferner weist die Membrantrenneinheit 10 einen Austrittsstutzen 14 für ein Permeat P sowie einen Austrittsstutzen 15 für ein Retentat R auf. In Figur 1 ist zusätzlich ein Eintrittsstutzen 16 für ein Spülgas S veranschaulicht, der jedoch nicht zwingend vorhanden sein muss.

In der in Figur 1 veranschaulichten Ausgestaltung der vorliegenden Erfindung sind jeweils innerhalb des Eintrittsstutzens 13 in den Druckbehälter 11 bzw. innerhalb des Austrittsstutzens 14 für das Permeat P Messmittel 17, 18 in Form entsprechender Sensoren vorgesehen. An dem Austrittsstutzen 14 für das Permeat P ist ein weiteres Messmittel 19 in Form eines entsprechenden Sensors vorgesehen.

Bei den hier veranschaulichten Messmitteln 17 und 18 handeln es sich um Drucksensoren zur Erfassung eines Transmembrandrucks bzw. jeweiliger Druckwerte auf beiden Seiten der Membrananordnung 12, wohingegen das Messmittel 19 insbesondere als Temperatursensor ausgebildet sein kann. In einer entsprechenden Membrantrenneinheit 10 müssen nicht sämtliche der dargestellten Messmittel und können zusätzliche Messmittel vorhanden sein, die an beliebigen unterschiedlichen Stellen angeordnet sein können.

Die genannten Messmittel 17, 18, 19 sind über drahtlose oder drahtgebundene Kommunikationsstrecken 171, 181 und 191 mit einer Dokumentationseinheit 20 verbunden, die zur Auswertung und/oder Speicherung der über die Messmittel 17, 18 und 19 erfassten, betriebsrelevanten Kenngrößen eingerichtet ist. Die Dokumentationseinheit 20 ist dabei insbesondere an dem Druckbehälter 11 oder innerhalb des Druckbehälters 11 angebracht und dauerhaft hiermit verbunden. Zur Funktionsweise der Membrantrenneinheit 10, die in Figur 1 dargestellt ist, sei auf die obigen Erläuterungen ausdrücklich verwiesen. Die Dokumentationseinheit 20 umfasst insbesondere ein Datenfernübertragungsmodul 21 bzw. eine fernauslesbare Speichereinrichtung 21.

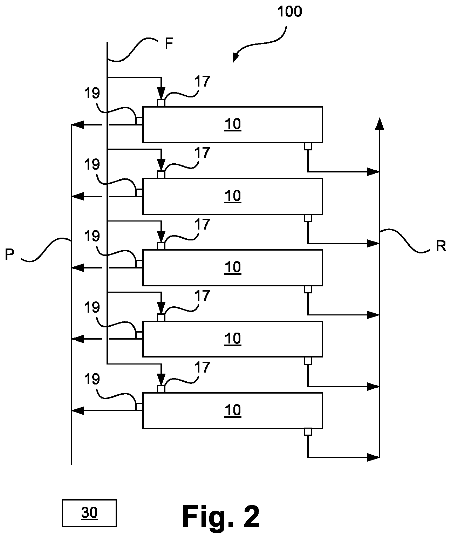

In Figur 2 ist eine Anordnung aus mehreren, hier identisch aufgebauten, gemäß einer Ausgestaltung der Erfindung ausgebildeten, und bereits zu Figur 1 erläuterten Membrantrenneinheiten 10 dargestellt und insgesamt mit 100 bezeichnet.

Ein Einsatzgasstrom F wird dabei auf die Membrantrenneinheiten 10 verteilt und über die hier nicht gesondert veranschaulichten Eintrittsstutzen 13 in die Membrantrenneinheiten 10 eingespeist. Entsprechend wird über die hier nicht gesondert veranschaulichten Entnahmestutzen für Permeat jeweils ein Permeatstrom aus den Membrantrenneinheiten 10 entnommen und zu einem Permeatsammelstrom P vereinigt. Entsprechendes gilt für einen Retentatsammelstrom R, der aus Retentat gebildet wird, das über die Entnahmestutzen 15 entnommen wird.

Ferner ist in der Anordnung 100 gemäß Figur 2 jeweils ein Messmittel 19 an den Permeataustrittsstutzen veranschaulicht, das hier als Temperatursensor ausgebildet ist. Mittels einer zentralen Auswerteeinheit 30 können Temperaturwerte zentral erfasst und einer Vergleichsauswertung unterworfen werden, wie bereits oben erläutert. Entsprechendes gilt für Werte der Messmittel 17 und (nicht dargestellt) 18.

## Patentansprüche

1. Membrantrenneinheit (10) für ein Membrantrennverfahren zur Trennung eines Gasgemischs, wobei die Membrantrenneinheit (10) einen Druckbehälter (11) und eine innerhalb des Druckbehälters (11) in einer Membrananordnung (12) bereitgestellte Membran aufweist, und wobei der Druckbehälter (11) einen Eintrittsstutzen (13) für ein Einsatzgasgemisch (F), einen Austrittsstutzen (14) für ein Permeat (P) und einen Austrittsstutzen (15) für ein Retentat (R) aufweist, **gekennzeichnet durch** zumindest teilweise innerhalb des Druckbehälters (11) und/oder des Eintrittsstutzens (13) für das Einsatzgasgemisch und/oder des Austrittsstutzens (14) für das Permeat (P) und/oder des Austrittsstutzens (15) für das Retentat (R) angeordnete Messmittel (17, 18, 19), die zur Erfassung einer oder mehrerer betriebsrelevanter Kenngrößen eingerichtet sind.

2. Membrantrenneinheit (10) nach Anspruch 1, mit einer innerhalb des Druckbehälters (11) angebrachten oder dauerhaft mit dieser verbundenen Dokumentationseinheit (20), die zur Auswertung und/oder Speicherung der einen oder der mehreren betriebsrelevanten Kenngrößen eingerichtet ist.

3. Membrantrenneinheit (10) nach Anspruch 2, wobei die Dokumentationseinheit (20) zur Bereitstellung, Auswertung und/oder Speicherung eines zeitlichen Verlaufs der einen oder der mehreren betriebsrelevanten Kenngrößen eingerichtet ist.

4. Membrantrenneinheit (10) nach Anspruch 3, wobei die Dokumentationseinheit (20) dafür eingerichtet ist, auf Grundlage der einen oder der mehreren betriebsrelevanten Kenngrößen und/oder eines oder mehrerer Merkmale des zeitlichen Verlaufs einen nicht spezifikationsgerechten Betrieb zu detektieren.

5. Membrantrenneinheit (10) nach einem der Ansprüche 2 bis 4, wobei die Dokumentationseinheit (20) eine fernauslesbare Speichereinrichtung (21) aufweist.

6. Membrantrenneinheit (10) nach einem der vorstehenden Ansprüche, wobei die Messmittel (17, 18) wenigstens einen Druckgeber umfassen, und wobei die eine oder mehreren betriebsrelevanten Kenngrößen einen Druckwert umfassen.

7. Membrantrenneinheit (10) Anspruch 6, wobei der wenigstens eine Druckgeber auf einer Permeat- und/oder einer Retentatseite der Membrananordnung (12) innerhalb des Druckbehälters (11) und/oder des Eintrittsstutzens (13) für das Einsatzgasgemisch und/oder des Austrittsstutzens (14) für das Permeat (P) und/oder des Austrittsstutzens (15) für das Retentat (R) angeordnet ist.

8. Membrantrenneinheit (10) nach einem der vorstehenden Ansprüche, wobei die Messmittel (19) wenigstens einen Temperaturgeber umfassen, und wobei die eine oder mehreren betriebsrelevanten Kenngrößen einen Temperaturwert umfassen.

9. Membrantrenneinheit (10) nach Anspruch 8, bei dem der wenigstens eine Temperaturgeber innerhalb des Austrittsstutzens (14) für das Permeat (P) aus dem Druckbehälter (11) angeordnet ist.

10. Anordnung (100) zur Trennung eines Gasgemischs mittels eines Membrantrennverfahrens, **gekennzeichnet durch** mehrere Membrantrenneinheiten (10) nach einem der vorstehenden Ansprüche.

11. Anordnung (100) nach Anspruch 10, mit einer zentralen Auswerteeinheit (30), die dafür eingerichtet ist, die eine oder die mehreren betriebsrelevanten Kenngrößen, die mittels der Messmittel (19) der mehreren Membrantrenneinheiten (10) erfasst wurden, einer Vergleichsauswertung zu unterwerfen.

12. Anordnung (100) nach Anspruch 11, bei der die Vergleichsauswertung eine Ausreißerermittlung umfasst.

13. Anordnung (100) nach Anspruch 12, bei der die Ausreißerermittlung sich auf mehrere mittels der Messmittel (19) der mehreren Membrantrenneinheiten (10) ermittelte Temperaturen bezieht.

14. Verfahren zur Trennung eines Gasgemischs mittels eines Membrantrennverfahrens, **dadurch gekennzeichnet, dass** eine oder mehrere Membrantrenneinheiten (10) nach einem der Ansprüche 1 bis 9 und/oder eine Anordnung (100) nach einem der Ansprüche 10 bis 13 verwendet wird.

15. Verfahren nach Anspruch 14, bei dem mittels der Messmittel (17, 18, 19), die einer oder die mehreren betriebsrelevanten Kenngrößen erfasst werden.
